# EUROPEAN PATENT APPLICATION

(11) **EP 4 847 645 A1**
(43) Date of publication of application: **02.12.2026**
(21) Application number: 24939063.4
(22) Date of filing: 30.09.2024
(51) Int. Cl.: C22B 23/00, C22B 47/00, C22B 3/26, C22B 3/00

(54) **OPTIMIZATION METHOD FOR O/A RATIO DURING ION EXTRACTION OF NICKEL AND COBALT (MANGANESE) FROM LATERITE NICKEL ORE AND USE OF OPTIMIZATION METHOD**

(71) Applicant: GEM Co., Ltd., Shenzhen, Guangdong 518100 (CN); PT Green Eco Nickel, Jakarta Selatan, Provinsi DKI Jakarta, 12950 (ID); PT ESG New Energy Material, Jakarta Selatan, Provinsi DKI Jakarta 12950 (ID); PT QMB New Energy Materials, Jakarta Selatan, Provinsi DKI Jakarta, 12950 (ID)
(72) Inventor: XU, Kaihua, Shenzhen Guangdong 518100 (CN); AJI, Tegar Mukti, Jakarta Selatan Provinsi DKI Jakarta 12950 (ID); HASIBUAN, Andi Syaputra, Jakarta Selatan Provinsi DKI Jakarta 12950 (ID); WANALDI, Rizky, Jakarta Selatan Provinsi DKI Jakarta 12950 (ID)
(74) Representative: Tiburzi, Andrea
(86) International application number: PCT/CN2024/122778
(87) International publication number: WO 2026/065409

(57) **Abstract**

Disclosed in the present application are a method for optimizing an O/A ratio in ion extraction of nickel-cobalt (manganese) from laterite nickel ore and use thereof. The optimization method comprises the following steps: obtaining a liquid parameter of a liquid to be extracted, a parameter of an extractant and a target extraction efficiency of manganese; constructing a theoretical O/A ratio model and determining a theoretical O/A ratio based on the liquid parameter, the parameter of the extractant, the target extraction efficiency of manganese and the theoretical O/A ratio model; and constructing a limiting condition and determining an optimal O/A ratio based on the theoretical O/A ratio and the limiting condition. In the present application, based on the combination of theory with production practice, aiming at the selection of the O/A ratio of the extraction section in the nickel-cobalt (manganese) co-extraction process by different extractants and the solution to avoid the generation of the third phase in the extraction, a corresponding theoretical model is established, and the optimal O/A ratio is determined on the basis of the theoretical model, and ultimately, the nickel-cobalt (manganese) mixed solution obtained from co-extraction with the optimal O/A ratio is to be used in the preparation of nickel-cobalt (manganese) precursors and ternary cathode materials.

## Description

### TECHNICAL FIELD

The present application relates to the technical field of hydrometallurgy, and particularly relates to a method for optimizing an O/A ratio in ion extraction of nickel-cobalt (manganese) from laterite nickel ore and use thereof.

### BACKGROUND

At the present stage, for the process of preparing battery-grade nickel-cobalt-manganese crystals by hydrometallurgy of laterite nickel ore, the following procedures are generally employed: high pressure leaching - multi-stage iron-aluminum removal by neutralization - multi-stage MHP precipitation - leaching and impurity removal - impurity extraction with P204 - cobalt extraction with P507 - magnesium collection with P507 - P507 enrichment of nickel, cobalt and manganese separately. In order to simplify the above cumbersome process, the nickel-cobalt (manganese) co-extraction process has been developed with the rapid emergence of ternary new energy materials, i.e., the nickel-cobalt (manganese) is extracted from the nickel-cobalt-manganese mixed solution at the same time, so as to quickly separate the nickel-cobalt (manganese) from other impurity ions.

In the nickel-cobalt (manganese) co-extraction process of laterite nickel ore, the O/A ratio (i.e., the volume ratio of the extraction organic phase to the aqueous phase) of the extraction section directly affects the extraction efficiency, selectivity and recovery yield of metal ions. The selection of the O/A ratio is crucial for optimizing the whole extraction process. Specifically, a high O/A ratio will increase the extraction efficiency of metal ions. As the O/A ratio increases, the enhancement of the recovery yield will decrease gradually until a steady state is reached. However, an excessively high O/A ratio will not only reduce the extractant selectivity for the target metal, but also lead to the third phase in the extraction bath hindering the extraction process. At present, both the industrialized nickel-cobalt (manganese) co-extractants and the newly developed co-extractants can be broadly divided into two categories: one is the co-extractant by which the pH of the aqueous phase decreases after the extraction reaction, i.e., the equilibrium pH < the initial pH, including, for example, HBL110, HBL116, and other composite extractants, and the other is the extractant by which the pH of the aqueous phase rises after the extraction reaction, i.e., the equilibrium pH > the initial pH, including, for example, Versatic 10, DY319, etc.; such extractants generally have high loading capacity and acid resistance, but the increased pH of aqueous phase after the extraction reaction will lead to the third phase in the extraction section of the continuous extraction tank; accordingly, the phase separation of the extraction will be affected, and at the same time, the third phase will clog the extraction tank, hindering the extraction process. The root cause of the third-phase appearance and how to optimize the O/A ratio to solve the problem of the third-phase appearance in the extraction are both the challenges faced by the extraction industry.

In practice, the O/A ratio needs to be adjusted according to the specific situation. At present, for the nickel-cobalt (manganese) co-extraction process, a constant O/A ratio is generally selected according to the ionic components and their contents of different nickel-cobalt (manganese) mixtures, or the O/A ratio may be adjusted only based on human judgment. However, the components and their contents of the nickel-cobalt (manganese) mixtures obtained by different processes in the hydrometallurgy of laterite nickel ore are different, resulting in the O/A ratio being too high or too low in the actual operation, leading to unnecessary cost elevation or reduced production efficiency.

### SUMMARY

An object of the present application is to overcome the above technical deficiencies. A method for optimizing an O/A ratio in ion extraction of nickel-cobalt (manganese) from laterite nickel ore and use thereof are provided, to solve the technical problem of the prior art that the use of a constant O/A ratio or the adjustment only based on human judgment leads to unnecessary cost elevation or reduced production efficiency.

In a first aspect, the present application provides a method for optimizing an O/A ratio in ion extraction of nickel-cobalt (manganese) from laterite nickel ore, comprising the following steps:
obtaining a liquid parameter of a liquid to be extracted, a parameter of an extractant and a target extraction efficiency of manganese;
constructing a theoretical O/A ratio model and determining a theoretical O/A ratio based on the liquid parameter, the parameter of the extractant, the target extraction efficiency of manganese and the theoretical O/A ratio model; and
constructing a limiting condition and determining an optimal O/A ratio based on the theoretical O/A ratio and the limiting condition; wherein
the liquid parameter comprises a composition of the liquid to be extracted and a pH of the liquid to be extracted;
the parameter of the extractant comprises a species of the extractant, an acid value of the extractant, a dilution rate of the extractant and a saponification rate of the extractant.

In a second aspect, the present application provides use of the method for optimizing an O/A ratio in ion extraction of nickel-cobalt (manganese) from laterite nickel ore in the preparation of nickel-cobalt (manganese) precursors.

In a third aspect, the present application provides use of the method for optimizing an O/A ratio in ion extraction of nickel-cobalt (manganese) from laterite nickel ore in the preparation of nickel-cobalt (manganese) ternary cathode materials.

Compared with the prior art, the beneficial effects of the present application include:
based on the combination of theory with production practice, aiming at the selection of the O/A ratio of the extraction section in the nickel-cobalt (manganese) co-extraction process by different extractants and the solution to avoid the generation of the third phase in the extraction, a corresponding theoretical model is established in the present application, and the optimal O/A ratio is determined on the basis of the theoretical model for the extraction section of ion extraction process of nickel-cobalt (manganese) from laterite nickel ore, and ultimately, the nickel-cobalt (manganese) mixed solution obtained from co-extraction with the optimal O/A ratio is to be used in the preparation of nickel-cobalt (manganese) precursors and ternary cathode materials. The method provided by the present application can also be applied to the field of other extractants.

### BRIEF DESCRIPTION OF DRAWINGS

FIG. 1 is a process flow diagram showing an embodiment of a method for optimizing an O/A ratio in ion extraction of nickel-cobalt (manganese) from laterite nickel ore provided by the present application;
FIG. 2 is a graph showing the relationship between the maximum threshold pH of the raffinate and the manganese concentration.

### DETAILED DESCRIPTION

In order to make the objects, technical solutions and advantages of the present application clearer and more understandable, the present application is described in further detail hereinafter via the accompanying drawings and embodiments. It should be understood that the specific embodiments described herein are only used for explaining the present application and are not intended to limit the present application.

In a first aspect, the present application provides a method for optimizing an O/A ratio in ion extraction of nickel-cobalt (manganese) from laterite nickel ore, comprising the following steps:
S1. obtaining a liquid parameter of a liquid to be extracted, a parameter of an extractant and a target extraction efficiency of manganese; the liquid parameter comprises a composition of the liquid to be extracted and a pH of the liquid to be extracted, and the parameter of the extractant comprises a species of the extractant, an acid value of the extractant, a dilution rate of the extractant and a saponification rate of the extractant;
S2. constructing a theoretical O/A ratio model and determining a theoretical O/A ratio based on the liquid parameter, the parameter of the extractant, the target extraction efficiency of manganese and the theoretical O/A ratio model; and
S3. constructing a limiting condition and determining an optimal O/A ratio based on the theoretical O/A ratio and the limiting condition.

In this embodiment, in step S1, the liquid to be extracted is obtained from the hydrometallurgical process of laterite nickel ore. The specific source and composition of the liquid to be extracted are not limited in the present application, and those skilled in the art may choose according to the actual situation. For example, the liquid to be extracted may be an iron-aluminum-removed liquid or a P204 back-extraction liquid, etc. In some specific embodiments of the present application, an iron-aluminum-removed liquid I is obtained by pressure filtration after the laterite nickel ore leach liquid is subjected to a plurality of iron-aluminum removal stages; an iron-aluminum-removed liquid II is obtained by subjecting the MHP cake, which is obtained by subjecting the iron-aluminum-removed liquid I to a plurality of MHP precipitation stages, to leaching and impurity removal by neutralizing; and the P204 back-extraction liquid is obtained by subjecting the iron-aluminum-removed liquid II to impurity extraction by P204.

In this embodiment, in step S1, the extractant comprises one of a first extractant or a second extractant; wherein the first extractant is an extractant by which an aqueous phase pH decreases after the extraction reaction, i.e., the equilibrium pH < the initial pH; and the second extractant is an extractant by which an aqueous phase pH increases after the extraction reaction, i.e., the equilibrium pH > the initial pH. The specific species of the first extractant or the second extractant is not limited in the present application, and those skilled in the art may choose according to the actual situation. In some specific embodiments of the present application, the first extractant may be HBL110, HBL116, etc., and the second extractant may be Versatic 10, DY319, etc.

In this embodiment, in step S1, the selection principle of the target extraction efficiency of manganese is as follows: if the liquid to be extracted contains calcium, the target extraction efficiency of manganese needs to be appropriately lowered; the reason is that the extraction efficiency of the extractant for calcium or magnesium is generally lower than that of nickel-cobalt (manganese), but calcium is more difficult to be eluted off relative to magnesium, and a large amount of nickel-cobalt (manganese) will be lost in the washing section to elute calcium if a large amount of calcium is extracted. In addition, if the elution rate of calcium in the washing section is insufficient, calcium sulfate will be continuously enriched in the back-extraction liquid, affecting the quality of the final nickel-cobalt (manganese) product.

Specifically, in the liquid to be extracted, in a case where a Mn/Ca mass ratio is < 10, the target extraction efficiency of manganese (η) is < 40%; in a case where 10 ≤ the Mn/Ca mass ratio < 200, the target extraction efficiency of manganese (η) satisfies: 100% > η ≥ 40%; in a case where the Mn/Ca mass ratio is ≥ 200, the target extraction efficiency of manganese (η) is 100%.

In this embodiment, in step S2, the theoretical O/A ratio model is calculated by the following formula: $O / A = γ {\sum }_{i = 1}^{n} \frac{{C}_{i} \times {X}_{i} \times {η}_{i}}{A \times D \times S}$ (1) wherein i represents a metal element, a metal-ion extraction efficiency of which is more than or equal to an extraction efficiency of manganese in the liquid to be extracted by the extractant; γ represents an excess coefficient of an extraction organic phase, γ is taken as 1.4 for the first extractant, and γ is taken as 1.3 for the second extractant; Cᵢ represents a molar concentration of a single metal ion in the liquid to be extracted; Xᵢ represents a valence of the single metal ion in the liquid to be extracted; ηᵢ represents an extraction efficiency of the single metal ion by the extractant, and the extraction efficiency η is 100% for the metal element, the metal-ion extraction efficiency of which is more than the extraction efficiency of manganese in the liquid to be extracted by the extractant; A represents the acid value of the extractant; D represents the dilution rate of the extractant; S represents the saponification rate of the extractant.

In this embodiment, in step S3, the step of determining the optimal O/A ratio based on the theoretical O/A ratio and the limiting condition comprises:
in a case where the extractant is the first extractant, the theoretical O/A ratio is the optimal O/A ratio; or,
in a case where the extractant is the second extractant and Mn/Ca ≥ 200 in the liquid to be extracted, the theoretical O/A ratio is the optimal O/A ratio; or,
in a case where the extractant is the second extractant and Mn/Ca < 200 in the liquid to be extracted, the optimal O/A ratio is determined according to the following steps:
   S31. obtaining an actual pH and a Mn²⁺ concentration of a first raffinate based on the theoretical O/A ratio;
   S32. constructing a maximum threshold pH model for the raffinate, and determining a maximum threshold pH of the raffinate based on the Mn²⁺ concentrationin of the first raffinate and the maximum threshold pH model for the raffinate; and
   S33. determining the optimal O/A ratio based on the actual pH of the first raffinate and the maximum threshold pH of the raffinate.

In this embodiment, for the first extractant by which the raffinate pH decreases, since the equilibrium pH < the initial pH, the calculated theoretical O/A ratio can be used directly as the optimal O/A ratio for the extraction section; for the extraction system in which the extractant is the second extractant and the Mn/Ca ratio of the liquid to be extracted is ≥ 200, the content of calcium ions in the liquid to be extracted is extremely small, and manganese is fully extracted in the extraction section, resulting in the raffinate obtained from extraction containing a little of manganese or no manganese, and therefore, there is no problem of manganese hydrolysis to produce the third phase in the extraction section, and the calculated theoretical O/A ratio can be used directly as the optimal O/A ratio for the extraction section; for the extractant is the second extractant and the Mn/Ca ratio of the liquid to be extracted is < 200, since the equilibrium pH > the initial pH, after calculating the theoretical O/A ratio, in order to avoid the third phase in the extraction section and ensure the normal operation of the nickel-cobalt (manganese) co-extraction process, the actual pH of the first raffinate and the maximum threshold pH of the raffinate are also needed to determine the optimal O/A ratio.

More specifically, the step of obtaining the actual pH and the Mn²⁺ concentration of the first raffinate based on the theoretical O/A ratio comprises: obtaining the actual pH and the Mn²⁺ concentration of the first raffinate after carrying out co-extraction process based on the liquid parameter, the parameter of the extractant, the theoretical O/A ratio and actual production conditions. In the step, the actual production conditions include: the extraction temperature, the extraction period, and the number of extraction stages.

More specifically, the maximum threshold pH model for the raffinate is calculated by the following formula: $p {H}_{max} = 14 + 1.3 \frac{lo {g}_{10} {K}_{SP} \left(Mn{\left(OH\right)}_{2}\right) - lo {g}_{10} C \left(M{n}^{2 +}\right)}{2}$ (2) wherein pHₘₐₓ represents the maximum threshold pH of the raffinate, K₍ₛₚ₎[Mn(OH)₂] represents a constant related to temperature and pressure, which is 4×10⁻¹⁴ at the normal temperature and pressure; C(Mn²⁺) represents a molar concentration of Mn²⁺ in the raffinaten; and the coefficient of 1.3 is related to the fact that the hydrolysis of Mn²⁺ can be accelerated by the gradual oxidation of Mn²⁺ in the air.

More specifically, the step of determining the optimal O/A ratio based on the actual pH of the first raffinate and the maximum threshold pH of the raffinate comprises:
in a case where the actual pH of the first raffinate is less than the maximum threshold pH of the raffinate, the theoretical O/A ratio is the optimal O/A ratio; or,
in a case where the actual pH of the first raffinate is greater than the maximum threshold pH of the raffinate, the O/A ratio is reduced based on the theoretical O/A ratio until a corresponding pH of the raffinate is less than the maximum threshold pH of the raffinate, and then the O/A ratio is taken as the optimal O/A ratio.

Specifically, in the co-extraction process, the raffinate pH is determined according to the Kₛₚ[Mn(OH)₂] of the Mn hydrolysis reaction. In order to avoid the generation of third phase in the extraction, the raffinate pH must be lower than the maximum threshold pH of the raffinate determined according to the threshold pH model of the raffinate.

In some preferred embodiments of the present application, the minimum threshold pH of the raffinate is 5.5 for the second extractant. An overly small raffinate pH will reduce the extraction efficiency of nickel-cobalt (manganese) in the extraction section.

In this embodiment, the extractant is the first extractant, the acid value of the extractant is 1-3 mol/L, the dilution rate is 30-60%, the saponification rate is 35-60%, the number of extraction stages is 6-10, an extraction temperature is room temperature, an extraction period is 6-10 min, and the pH of the liquid to be extracted is 4-6. Within the above ranges of parameters, the nickel-cobalt-manganese co-extraction can be carried out efficiently, and the production efficiency can be improved.

In this embodiment, the extractant is the second extractant, the acid value of the extractant is 1-3 mol/L, the dilution rate is 25-50%, the saponification rate is 20-50%, the number of extraction stages is 6-10, an extraction temperature is room temperature, an extraction period is 6-10 min, and the pH of the liquid to be extracted is 1.5-4. For the second extractant, because the raffinate pH is related to the intrinsic properties of the extractant, the saponification rate of the extractant, the pH of the liquid to be extracted and the number of extraction stages, these process factors should be well coordinated with each other to avoid the generation of the third phase in the extraction. Within the above ranges of parameters, it is avoided that the pH of the liquid to be extracted, the saponification rate and the number of extraction stages are overly high, thusly avoiding an overly high raffinate pH, and meanwhile, it is avoided that the pH of the liquid to be extracted, the saponification rate and the number of extraction stages are overly low, thusly avoiding a low extraction efficiency.

It should be emphasized that provided that other factors (such as the acid value of the extractant, the saponification rate, the dilution rate, the number of extraction stages, the extraction temperature, the pH of the liquid to be extracted, etc.) are set rationally, the theoretical model is established in the present application aiming at the selection of the O/A ratio of the extraction section in the nickel-cobalt (manganese) co-extraction process and the solution to avoid the generation of the third phase in the extraction by optimizing the O/A ratio, and the method related to the model is used to lead the co-extraction process.

In practice, after determining the optimal O/A ratio, the amount of extractant to be added to the liquid to be extracted can also be dynamically adjusted in real time according to the optimal O/A ratio.

In a second aspect, the present application provides use of the above method for optimizing an O/A ratio in ion extraction of nickel-cobalt (manganese) from laterite nickel ore in the preparation of nickel-cobalt (manganese) precursors.

In this embodiment, the use comprises:
T1. determining the optimal O/A ratio according to the method for optimizing an O/A ratio in ion extraction of nickel-cobalt (manganese) from laterite nickel ore provided in the first aspect of the present application;
T2. performing co-extraction based on the parameter of the liquid to be extracted, the parameter of the extractant and the optimal O/A ratio to obtain a second raffinate; and
T3. using the second raffinate to prepare the nickel-cobalt (manganese) precursor.

In this embodiment, in step T3, the second raffinate can be optionally subjected to impurity removal according to its components and corresponding contents. The method of impurity removal is not limited in the present application, and those skilled in the art may choose according to the actual situation. For example, P204 can be used for the impurity removal.

In some specific embodiments of the present invention, the high-purity nickel-cobalt (manganese) mixed solution obtained from nickel-cobalt (manganese) co-extraction of the iron-aluminum-removed liquid I and iron-aluminum-removed liquid II is purified by the P204 impurity removal line to obtain the battery-grade nickel-cobalt (manganese) mixed solution; and the high-purity nickel-cobalt (manganese) mixed solution obtained by subjecting the P204 back-extraction liquid to nickel-cobalt (manganese) co-extraction is the battery-grade nickel-cobalt (manganese) mixed solution.

In this embodiment, in step T3, according to the components and corresponding contents of the second raffinate and the components and corresponding contents of the target nickel-cobalt (manganese) precursor, nickel, cobalt, manganese, or other doping elements can be optionally added for compounding, and can be directly used to prepare the nickel-cobalt (manganese) precursor.

In a third aspect, the present application provides use of the above method for optimizing an O/A ratio in ion extraction of nickel-cobalt (manganese) from laterite nickel ore in the preparation of nickel-cobalt (manganese) ternary cathode materials.

By the method for optimizing an O/A ratio in ion extraction of nickel-cobalt (manganese) from laterite nickel ore provided in the present application, the optimal O/A ratio of the extraction section can be obtained, then the nickel-cobalt (manganese) co-extraction is performed by combining the optimal O/A ratio with other parameters to obtain a raffinate containing nickel-cobalt (manganese), then the raffinate containing nickel-cobalt (manganese) is subjected to optional impurity removal and compounding process to prepare the nickel-cobalt (manganese) precursor, and finally, the nickel-cobalt (manganese) precursor is prepared into the nickel-cobalt (manganese) ternary cathode material.

In the following embodiments and comparative embodiments of the present application, DY319 and HBL110 extractants currently used in the industry for nickel-cobalt (manganese) co-extraction are used as the extractants, and the nickel-cobalt (manganese) mixed solution obtained from different process sections of hydrometallurgy of laterite nickel ore are used as the liquid to be extracted, for the illustration of the O/A ratio optimization in the extraction section of the nickel-cobalt (manganese) co-extraction process. The source of the liquid to be extracted and the extraction steps are as follows:
(1) the laterite nickel ore leach liquid is subjected to a plurality of iron-aluminum removal stages and then subjected to pressure filtration to obtain the iron-aluminum-removed liquid I;
(2) the iron-aluminum-removed liquid I is subjected to a plurality of MHP precipitation stages and then pressure filtration to obtain the MHP cake, and then the MHP cake is subjected to leaching and impurity removal by neutralizing in sequence to obtain the iron-aluminum-removed liquid II;
(3) the iron-aluminum-removed liquid II is subjected to impurity extraction with P204 to obtain the P204 back-extraction liquid;
(4) one or more of the iron-aluminum-removed liquid I, iron-aluminum-removed liquid II and P204 back-extraction liquid are subjected to nickel-cobalt (manganese) co-extraction to obtain the loaded organic phase and raffinate; and
(5) the loaded organic phase is acid-washed, and the wash liquid is recycled to the extraction section, and then back-extraction is performed to obtain the high-purity nickel-cobalt (manganese) mixed solution.

In the embodiments of the present application, Embodiment 1 is used to illustrate the relationship between the maximum threshold pH of the raffinate and the manganese concentration, as well as the influence of the raffinate pH on the formation of the third phase in the continuous extraction process, and Embodiments 2-5 are used to further validate the above method via specific nickel and cobalt (manganese) co-extraction processes.

### Embodiment 1

The third phase will be formed when the pH of the raffinate is greater than the maximum threshold value, and the third phase cannot be formed when the pH of the raffinate is less than the maximum threshold value. According to the maximum threshold pH model for the raffinate provided by the present application, it can be deduced that there is a certain relationship between the maximum threshold pH of the raffinate and the Mn²⁺ molar concentration of the raffinate after the co-extraction. By substituting the Mn²⁺ molar concentrations of different raffinates into the formula (2) separately, the relationship graph between the maximum threshold pH of the raffinate and the Mn²⁺ concentration can be obtained.

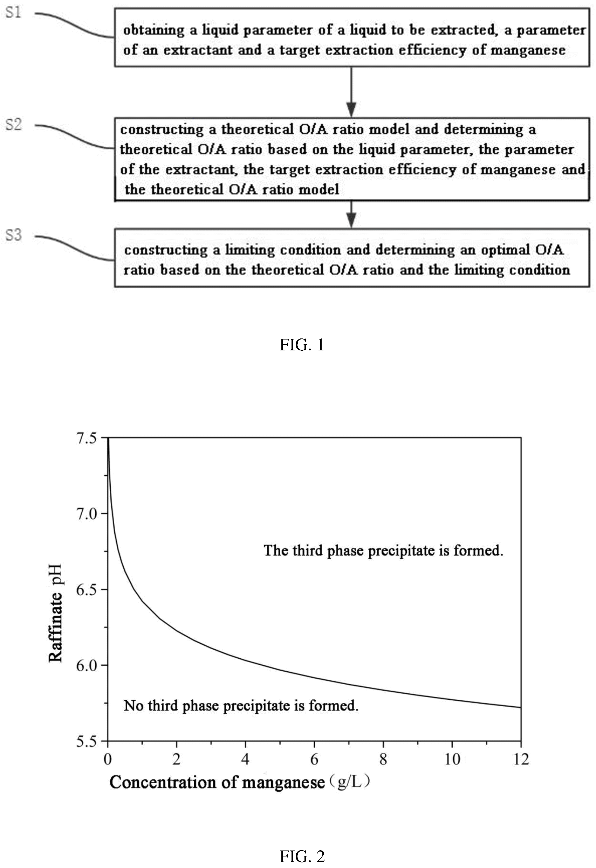

See FIG. 2; it can be seen from FIG. 2 that the maximum threshold pH of the raffinate gradually decreases with the increase of the manganese concentration.

### Embodiment 2

**Table 1 Components of multi-stage iron-aluminum-removed liquid I (g/L)**

| Ni | Co | Mn | Fe | Al | Zn | Cu | Ca | Mg | pH |
|---|---|---|---|---|---|---|---|---|---|
| 3.21 | 0.31 | 2.02 | 0.0007 | 0.004 | 0.0025 | 0.007 | 0.57 | 8.98 | 3.5 |

(1) Preparation of DY319 extraction organic phase: the selected diluent was sulfonated kerosene, the saponification agent was liquid sodium hydroxide, the dilution rate D of DY319 extraction organic phase was 50%, the saponification rate S was 35%, and the acid value A of DY319 was 3 mol/L.
(2) Nickel-cobalt (manganese) co-extraction: the selectivity of DY319 for the elements listed in Table 1 was Cu> Zn> Fe> Al> Ni> Co> Mn> Ca> Mg, and accordingly the mass concentrations of Cu, Zn, Fe, Al, Ni, Co and Mn were converted to molar concentrations and then put into the formula (1) for calculation, and the extraction efficiency η of manganese in the extraction section was taken as 30% for calculation. The parameters were put into formula (1) to calculate the O/A ratio: $O / A = \frac{1.3 \left(2\frac{0.007}{63.55}+2\frac{0.0025}{65.41}+3\frac{0.0007}{55.85}+3\frac{0.004}{26.98}+2\frac{3.21}{58.69}+2\frac{0.31}{58.93}+2\frac{2.02}{54.94}\times 0.3\right)}{3 \times 0.5 \times 0.35}$

That is, O/A=0.35.

The extraction temperature was room temperature, the number of extraction stages was 7, and the extraction period was 8 min. It was found that the third phase was formed in the extraction section after performing the co-extraction process according to the O/A ratio, in which case the pH of the raffinate was 6.82, and the mass concentration of Mn in the raffinate was 1.52 g/L.

The mass concentration of Mn in the raffinate was converted to the molar concentration and put into the formula (2) to calculate the pH range of the raffinate when the third phase was not generated: $pH < 14 + 1.3 \frac{{log}_{10} \left(4∗{10}^{- 14}\right) - {log}_{10} \frac{1.52}{54.94}}{2}$

That is: pH< 6.30.

It was found from the experiment that the raffinate PH was stabilized at 6.01, which was lower than 6.30, when the O/A ratio was adjusted to 0.30. It can be seen from FIG. 2 that the raffinate PH of 6.01 was also lower than the corresponding maximum threshold pH of the raffinate. In addition, it was found that no third phase was generated in the extraction section of the co-extraction process at the O/A ratio of 0.30. In such case, the extraction efficiency of nickel was 92%.

(3) Washing: the extraction organic phase was washed with 0.12 mol/L sulfuric acid, and the wash water was recycled to the extraction section; for the washing, the O/A ratio was 10:1, the number of wash stages was 6, and the reaction period was 12 min.

(4) Back-extraction: the organic phase was subjected to back-extraction with 2.75 mol/L sulfuric acid; for the back-extraction, the O/A ratio was 20:1, the number of back-extraction stages was 8, the reaction period was 14 min, and the components of the nickel-cobalt (manganese) mixed salt solution obtained were:

**Table 2 Components of co-extracted nickel-cobalt (manganese) mixed salt solution (g/L)**

| Ni | Co | Mn | Fe | Al | Zn | Cu | Ca | Mg |
|---|---|---|---|---|---|---|---|---|
| 104.21 | 9.5 | 16.42 | 0.019 | 0.102 | 0.077 | 0.220 | 0.52 | 0.0014 |

(5) P204 purification line: the above nickel-cobalt (manganese) mixed salt solution was subjected to purification by the P204 purification line to obtain a battery-grade nickel-cobalt (manganese) mixed salt solution satisfying the requirements for the preparation of ternary materials.

### Embodiment 3

Different from Embodiment 1, the O/A ratio of the extraction section of the co-extraction process was reduced to 0.21, in which case the raffinate pH was 5.5; although the generation of the third phase in the extraction was suppressed, the extraction efficiency of nickel decreased to 76%. Obviously, the utilizing efficiency of the extractant and the production efficiency are reduced, and the production cost is increased. Hence, the O/A ratio should not be too large or too small.

### Embodiment 4

**Table 3 Components of P204 back-extraction liquid (g/L)**

| Ni | Co | Mn | Ca | Mg | pH |
|---|---|---|---|---|---|
| 103.28 | 7.76 | 7.02 | 0.001 | 6.2 | 2.8 |

Since the impurities in the P204 back-extraction liquid only contained a very small amount of Ca and Mg and the Mn/Ca mass ratio was ≥ 200, the extraction efficiency of manganese was taken as 100%; additionally, due to the excellent selectivity of DY319 for nickel and cobalt in the calcium and magnesium system, manganese was fully extracted in the extraction section, resulting in the raffinate obtained from extraction containing a little of manganese or no manganese, and hence there did not exist the problem of the third phase brought by manganese hydrolysis in the extraction section. The O/A ratio was calculated directly from the formula (1). The co-extraction steps are as follows:
(1) Preparation of DY319 extraction organic phase: the selected diluent was sulfonated kerosene, the saponification agent was liquid sodium hydroxide, the dilution rate D of DY319 extraction organic phase was 50%, the saponification rate S was 45%, and the acid value A of DY319 was 3 mol/L.
(2) Nickel-cobalt (manganese) co-extraction: the mass concentrations of Ni, Co and Mn were converted to molar concentrations and then put into the formula (1) for calculation, and the extraction efficiency η of manganese in the extraction section was taken as 100% for calculation. The parameters were put into formula (1) to calculate the O/A ratio: $O / A = \frac{1.3 \times 2 \left(\frac{103.28}{58.69}+\frac{7.76}{58.93}+\frac{7.02}{54.94}\right)}{3 \times 0.5 \times 0.45}$

That is, O/A≈7.78.

The extraction temperature was room temperature, the number of extraction stages was 8, and the extraction period was 7 min. It was found that no third phase was formed in the extraction section after performing the co-extraction process according to the O/A ratio, in which case the pH of the raffinate was 7.09. It was found by the experiment that the extraction efficiency of nickel was 99%. Hence, the O/A ratio was set suitably.

(3) Washing: the extraction organic phase was washed with 0.15 mol/L sulfuric acid, and the wash water was recycled to the extraction section; for the washing, the O/A ratio was 15:1, the number of wash stages was 6, and the reaction period was 10 min.

(4) Back-extraction: the organic phase was subjected to back-extraction with 2.75 mol/L sulfuric acid; for the back-extraction, the O/A ratio was 20:1, the number of back-extraction stages was 8, the reaction period was 12 min, and the components of the nickel-cobalt (manganese) mixed salt solution obtained were:

**Table 4 Components of co-extracted nickel-cobalt (manganese) mixed salt solution (g/L)**

| Ni | Co | Mn | Ca | Mg |
|---|---|---|---|---|
| 114.75 | 8.23 | 7.14 | 0.0012 | 0.0009 |

The solution fully meets the preparation requirements of ternary materials and can be compounded and prepared to high-nickel NCM ternary precursors.

### Embodiment 5

The multi-stage iron-aluminum-removed liquid I was subjected to co-extraction with HBL110; the components of the multi-stage iron-aluminum-removed liquid I were the same as those in Embodiment 2, and the pH was adjusted to 5. Because the pH of the raffinate decreased relative to the initial pH of the liquid to be extracted after extraction with HBL110 extractant, no third phase appeared in the extraction section. The co-extraction steps are as follows:
(1) Preparation of HBL110 extraction organic phase: the selected diluent was sulfonated kerosene, the saponification agent was liquid sodium hydroxide, the dilution rate D of HBL110 extraction organic phase was 50%, the saponification rate S was 45%, and the acid value A of HBL110 was 1 mol/L.
(2) Nickel-cobalt (manganese) co-extraction: the selectivity of HBL110 for the elements listed in Table 1 was Cu> Ni> Co> Zn> Mn> Fe, Al, Ca, Mg, and accordingly the mass concentrations of Cu, Ni, Co, Zn, and Mn were converted to molar concentrations and then put into the formula (1) for calculation, and because the extracted aqueous phase contained lots of impurities, the extraction efficiency η of manganese in the extraction section was taken as 30% for calculation. The parameters were put into the formula (1) to calculate the O/A ratio: $O / A = \frac{1.4 \left(2\frac{0.007}{63.55}+2\frac{0.0025}{65.41}+2\frac{3.21}{58.69}+2\frac{0.31}{58.93}+2\frac{2.02}{54.94}\times 0.3\right)}{1 \times 0.5 \times 0.45}$

That is, O/A≈0.88.

The extraction temperature was room temperature, the number of extraction stages was 8, and the extraction period was 9 min. No third phase was formed in the extraction section after performing the co-extraction process according to the O/A ratio, in which case the pH of the raffinate was 4.5. It was found by the experiment that in the extraction section, the extraction efficiency of nickel was 97%, and the extraction efficiency of cobalt was 91%; the O/A ratio was set suitably.

(3) Washing: the extraction organic phase was washed with 0.12 mol/L sulfuric acid, and the wash water was recycled to the extraction section; for the washing, the O/A ratio was 15:1, the number of wash stages was 5, and the reaction period was 12 min.

(4) Back-extraction: the organic phase was subjected to back-extraction with 2.5 mol/L sulfuric acid; for the back-extraction, the O/A ratio was 20:1, the number of back-extraction stages was 8, the reaction period was 15 min, and the components of the nickel-cobalt (manganese) mixed salt solution obtained were:

**Table 5 Components of co-extracted nickel-cobalt (manganese) mixed salt solution (g/L)**

| Ni | Co | Mn | Fe | Al | Zn | Cu | Ca | Mg |
|---|---|---|---|---|---|---|---|---|
| 84.21 | 5.5 | 9.42 | 0.0009 | 0.001 | 0.008 | 0.015 | 0.012 | 0.0007 |

(5) P204 purification line: Cu, Zn, Fe, Al and Ca impurity elements in the above nickel-cobalt (manganese) mixed salt solution were removed by using the P204 purification line to obtain a battery-grade nickel-cobalt (manganese) mixed salt solution satisfying the requirements for the preparation of ternary materials.

The specific embodiments of the present application described above do not constitute a limitation to the protection scope of the present application. Any corresponding changes and deformations made according to the technical concepts of the present application shall be included in the protection scope of the claims of the present application.

## Claims

1. A method for optimizing an O/A ratio in ion extraction of nickel-cobalt (manganese) from laterite nickel ore, comprising the following steps:
obtaining a liquid parameter of a liquid to be extracted, a parameter of an extractant and a target extraction efficiency of manganese;
constructing a theoretical O/A ratio model and determining a theoretical O/A ratio based on the liquid parameter, the parameter of the extractant, the target extraction efficiency of manganese and the theoretical O/A ratio model; and
constructing a limiting condition and determining an optimal O/A ratio based on the theoretical O/A ratio and the limiting condition; wherein
the liquid parameter comprises a composition of the liquid to be extracted and a pH of the liquid to be extracted;
the parameter of the extractant comprises a species of the extractant, an acid value of the extractant, a dilution rate of the extractant and a saponification rate of the extractant.

2. The method for optimizing an O/A ratio in ion extraction of nickel-cobalt (manganese) from laterite nickel ore according to claim 1, wherein in the liquid to be extracted, in a case where a Mn/Ca mass ratio is < 10, the target extraction efficiency of manganese is < 40%; in a case where 10 ≤ the Mn/Ca mass ratio < 200, the target extraction efficiency of manganese satisfies: 100% > η ≥ 40%; in a case where the Mn/Ca mass ratio is ≥ 200, the target extraction efficiency of manganese is 100%.

3. The method for optimizing an O/A ratio in ion extraction of nickel-cobalt (manganese) from laterite nickel ore according to claim 1, wherein the theoretical O/A ratio model is calculated by the following formula: $O / A = γ {\sum }_{i = 1}^{n} \frac{{C}_{i} \times {X}_{i} \times {η}_{i}}{A \times D \times S}$ (1) wherein i represents a metal element, a metal-ion extraction efficiency of which is more than or equal to an extraction efficiency of manganese in the liquid to be extracted by the extractant; γ represents an excess coefficient of an extraction organic phase, γ is taken as 1.4 for a first extractant by which an aqueous phase pH decreases after the extraction reaction, and γ is taken as 1.3 for a second extractant by which an aqueous phase pH increases after the extraction reaction; Cᵢ represents a molar concentration of a single metal ion in the liquid to be extracted; Xᵢ represents a valence of the single metal ion in the liquid to be extracted; ηᵢ represents an extraction efficiency of the single metal ion by the extractant, and the extraction efficiency η is 100% for the metal element, the metal-ion extraction efficiency of which is more than the extraction efficiency of manganese in the liquid to be extracted by the extractant; A represents the acid value of the extractant; D represents the dilution rate of the extractant; S represents the saponification rate of the extractant.

4. The method for optimizing an O/A ratio in ion extraction of nickel-cobalt (manganese) from laterite nickel ore according to claim 3, wherein the step of determining the optimal O/A ratio based on the theoretical O/A ratio and the limiting condition comprises:
in a case where the extractant is the first extractant, the theoretical O/A ratio is the optimal O/A ratio; or,
in a case where the extractant is the second extractant and Mn/Ca ≥ 200 in the liquid to be extracted, the theoretical O/A ratio is the optimal O/A ratio; or,
in a case where the extractant is the second extractant and Mn/Ca < 200 in the liquid to be extracted, the optimal O/A ratio is determined according to the following steps:
obtaining an actual pH and a Mn²⁺ concentration of a first raffinate based on the theoretical O/A ratio;
constructing a maximum threshold pH model for the raffinate, and determining a maximum threshold pH of the raffinate based on the Mn²⁺ concentrationin of the first raffinate and the maximum threshold pH model for the raffinate; and
determining the optimal O/A ratio based on the actual pH of the first raffinate and the maximum threshold pH of the raffinate.

5. The method for optimizing an O/A ratio in ion extraction of nickel-cobalt (manganese) from laterite nickel ore according to claim 4, wherein the step of obtaining the actual pH and the Mn²⁺ concentration of the first raffinate based on the theoretical O/A ratio comprises:
obtaining the actual pH and the Mn²⁺ concentration of the first raffinate after carrying out co-extraction process based on the liquid parameter, the parameter of the extractant, the theoretical O/A ratio and actual production conditions.

6. The method for optimizing an O/A ratio in ion extraction of nickel-cobalt (manganese) from laterite nickel ore according to claim 4, wherein the maximum threshold pH model for the raffinate is calculated by the following formula: $p {H}_{max} = 14 + 1.3 \frac{lo {g}_{10} {K}_{SP} \left(Mn{\left(OH\right)}_{2}\right) - lo {g}_{10} C \left(M{n}^{2 +}\right)}{2}$ (2) wherein pHₘₐₓ represents the maximum threshold pH of the raffinate, K₍ₛₚ₎[Mn(OH)₂] represents a constant related to temperature and pressure; C(Mn²⁺) represents a molar concentration of Mn²⁺ in the raffinate.

7. The method for optimizing an O/A ratio in ion extraction of nickel-cobalt (manganese) from laterite nickel ore according to claim 4, wherein the step of determining the optimal O/A ratio based on the actual pH of the first raffinate and the maximum threshold pH of the raffinate comprises:
in a case where the actual pH of the first raffinate is less than the maximum threshold pH of the raffinate, the theoretical O/A ratio is the optimal O/A ratio; or,
in a case where the actual pH of the first raffinate is greater than the maximum threshold pH of the raffinate, the O/A ratio is reduced based on the theoretical O/A ratio until a corresponding pH of the raffinate is less than the maximum threshold pH of the raffinate, and then the O/A ratio is taken as the optimal O/A ratio.

8. The method for optimizing an O/A ratio in ion extraction of nickel-cobalt (manganese) from laterite nickel ore according to claim 1, wherein the extractant is a first extractant, the acid value of the extractant is 1-3 mol/L, the dilution rate is 30-60%, the saponification rate is 35-60%, the number of extraction stages is 6-10, an extraction temperature is room temperature, an extraction period is 6-10 min, and the pH of the liquid to be extracted is 4-6; or,
the extractant is a second extractant, the acid value of the extractant is 1-3 mol/L, the dilution rate is 25-50%, the saponification rate is 20-50%, the number of extraction stages is 6-10, an extraction temperature is room temperature, an extraction period is 6-10 min, and the pH of the liquid to be extracted is 1.5-4.

9. Use of the method for optimizing an O/A ratio in ion extraction of nickel-cobalt (manganese) from laterite nickel ore according to claim 1 in preparation of nickel-cobalt (manganese) precursors.

10. Use of the method for optimizing an O/A ratio in ion extraction of nickel-cobalt (manganese) from laterite nickel ore according to claim 1 in preparation of nickel-cobalt (manganese) ternary cathode materials.
